# EUROPEAN PATENT SPECIFICATION

(11) **EP 1 520 734 B1**
(45) Date of publication and mention of the grant of the patent: **02.09.2009**
(21) Application number: 04104792.9
(22) Date of filing: 30.09.2004
(51) Int. Cl.: B60C 27/12

(54) **Improved tensioning device for snow chains**
Verbesserte Spannvorrichtung für Schneeketten
Tendeur amélioré pour chaînes à neige

(30) Priority: 02.10.2003 IT MI20030456 U
(43) Date of publication of application: 06.04.2005
(73) Proprietor: MAGGI CATENE S.p.A., 23854 Olginate (LECCO) (IT)
(72) Inventor: Maggi, Corrado, 23896 Sirtori (Lecco) (IT); Pastorini, Cesare, 20055 Renate (Milano) (IT)
(74) Representative: Faggioni, Marco

(56) References cited:
- EP-A1- 1 024 035
- PATENT ABSTRACTS OF JAPAN vol. 014, no. 147 (M-0952), 20 March 1990 (1990-03-20) & JP 02 011407 A (SUMITOMO RUBBER IND LTD), 16 January 1990 (1990-01-16)

## Description

The present invention relates to a tensioning device for snow chains, in particular to a device for autotensioning snow chains equipped with a non return device (also called "ratchet").

As known, in latest-generation chains, specifically studied to make fitting thereof to vehicle tyres easy, the outer chain ring is progressively closed and tightened on the tyre by the action of an elastic tensioning element which acts on one of the two ends of the chain (the one usually called "tensioning chain") after it has been made to pass through a non-return device attached to the other end.

This elastic tensioning element has been the subject of studies by designers, in order to make it ever more efficient, durable, easy to use, and aesthetically pleasing.

An example of the arrangement according to the preamble of claim 1 is described in EP 1.024.035.

However, prior art tensioning devices have two types of drawbacks.

Firstly, since they employ a simple elastic rope to achieve the desired tension on the tensioning chain, they require additional means to lock their ends, on one side, to the housing of fastening body connecting to the chain and, on the other side, to a holding hook of the tensioning chain: this means making the assembling step more complex (with an effect on manufacturing costs) and, especially, increasing the likelihood that critical elements become damaged, which would make the whole device unusable.

Secondly, the shape, size, and arrangement of the housing body of the tensioning element do not allow to correctly apply the tension on the snow chain, which is locally displaced, thereby reducing the design functional features thereof.

It is hence an object of the present invention to solve the above illustrated drawbacks, providing a tensioning device for snow chains having an extremely simple arrangement and apt to be effectively applied to the chain, as well as allowing to do without further fittings to fasten the ends of the elastic rope to the fastening body and to a hook element.

Such object is achieved through a device as described in its essential features in the accompanying main claim.

Other inventive aspects of the device are described in the dependent claims.

Further features and advantages of the device according to the invention will in any case be more evident from the following detailed description, given by way of example and illustrated in the attached drawings, wherein:

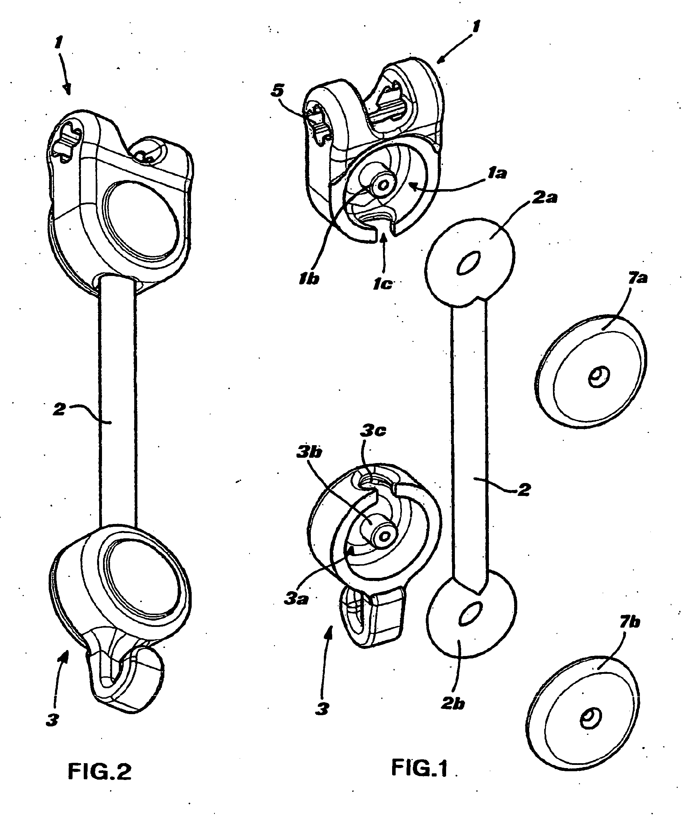

fig. 1 is an exploded rear perspective view of the device according to the invention;
fig. 2 is a front perspective view, similar to the one of fig. 1, with the device fully assembled;

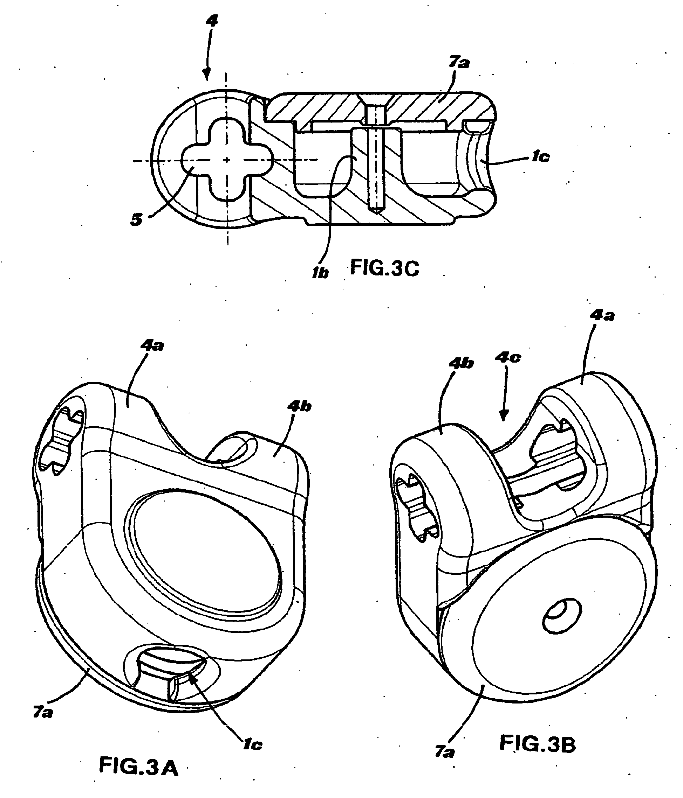

figs. 3A, 3B, and 3C are a front perspective view, a rear perspective view, and a longitudinal cross-section perspective view, respectively, of the fastening body according to the invention;

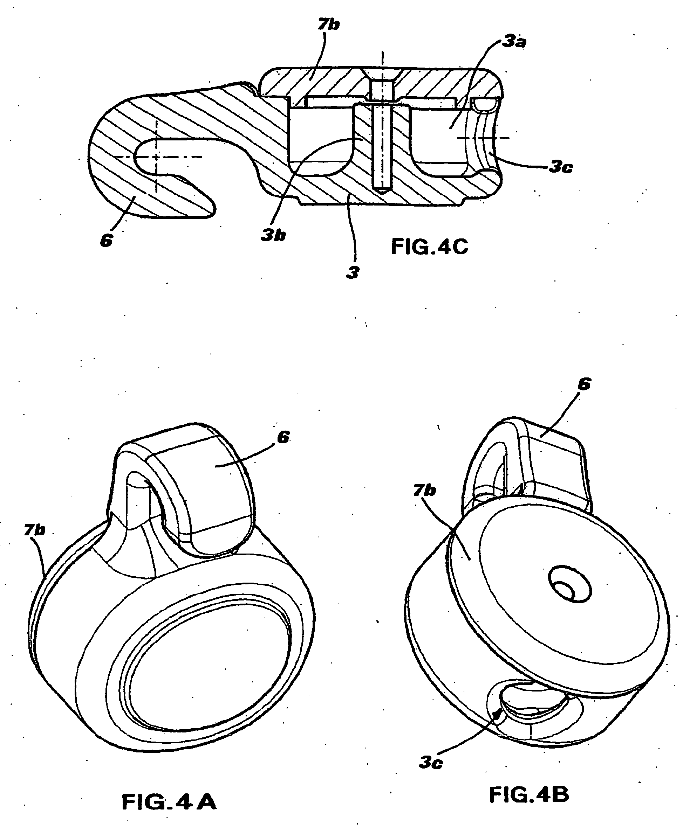

figs. 4A, 4B, and 4C are a front perspective view, a rear perspective view, and a longitudinal cross-section view, respectively, of the coupling element according to the invention; and
fig. 5 is an interrupted view, developed on a plane, of a snow chain onto which the device of the invention is applied.

A tensioning device for snow chains consists, in a manner known per se, of a body 1 fastening the device to the snow chain, an elastic rope 2 and an element 3 coupling the device to the tensioning chain (not shown).

According to the invention, the elastic rope is shaped so as to have essentially toroidal ends 2a and 2b. The rope having toroidally-shaped ends is advantageously moulded in a single piece, for example in elastomeric material.

The body 1 fastening the device to the snow chain has, correspondingly, a compartment where the toroidally-shaped end 2a can be blocked in the form of a circular chamber 1a, open on the rear side and provided with a small central column 1b.

The diameter of the cylindrical column 1b substantially corresponds to the diameter of the central hole of the toroidally-shaped end 2a.

At the periphery of compartment 1a, the body 1 has an opening 1c which also opens onto one side, preferably the rear side.

The body 1 further has a fastening fork consisting of two tines or protrusions 4a and 4b between which a recess 4c opens. A hole 5 having a cross-shaped section runs through both protrusions 4a and 4b, tangentially passing near compartment 1a. The crosswise dimensions of hole 5 are suitable for inserting therein, in a longitudinal direction, links M - alternately arranged and mutually rotated by 90° - of a portion of the snow chain, as will be better illustrated in the following.

Similarly to what has been illustrated above, the coupling element has a body 3 provided with a compartment 3a, a column 3b, and an opening 3c.

From body 3 a hook element 6 extends which is apt to be engaged with the end link of a tensioning chain (not shown).

The device according to the invention is completed by a series of two small covers 7a and 7b which are applied on the rear side of bodies 1 and 3 to close the respective compartments 1a and 3a. For that purpose, preferably, the covers have a central hole wherein the head of a tightening screw is engaged which is screwed into a nut-thread obtained in columns 1b and 3b.

With this arrangement, as can be guessed, assembling of the device can be accomplished in a very simple manner. The toroidally-shaped end 2a of the elastic element is inserted in compartment 1a, pushing rope 2 out of opening 1c; similarly, end 2b is introduced in compartment 3b of body 3. Thereafter covers 7a and 7b are applied, secured in position by their respective screws.

By doing so, the rope is securely fixed to the fastening element 1 and to the coupling element 3, without it being necessary to use further fittings to prearrange the ends of the elastic rope 2 for attachment to functional bodies 1 and 3. The main object of the invention has hence been achieved.

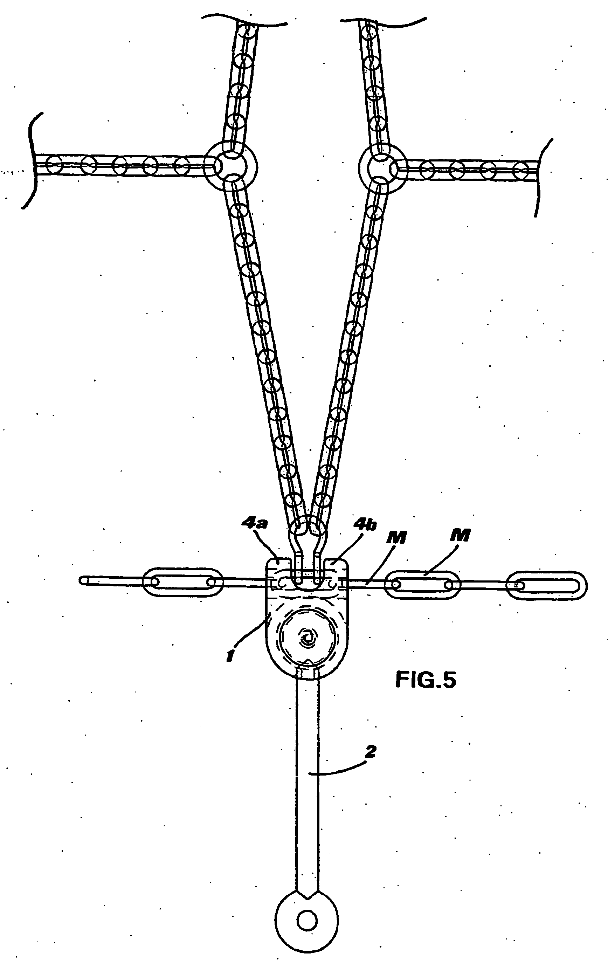

Moreover, with reference to fig. 5, the fastening element 1 is applied to the snow chain by inserting the links of the outer chain into hole 5; the link partially appearing in the cavity left free by recess 4c is then secured, through a U-shaped hook, to the lateral branches of the antiskid portion of the chain. In this way, thanks to its specific arrangement, the fastening body 1 can be secured to the snow chain in an extremely stable and scarcely movable position, so that the chain is prevented from displacing on the tyre even when rope 2 is subject to tensioning during operation.

It is understood that the description reported above is provided by way of example and that protection of the invention is not limited thereto, but extends to any other variant within the meaning of the appended claims.

For example, although a perfectly toroidal shape has been illustrated for the rope ends, similar results can be obtained with toroidally-shaped ends having a non-circular section or simply ending with a ring integral with the main rope.

## Claims

1. Tensioning device for snow chains equipped with non-return mechanism for automatic tensioning on a vehicle tyre, of the type comprising an elastic rope (2) provided, at the ends thereof, with separate functional elements (1, 3), **characterised in that** said rope (2) has at least one integral end (2a, 2b) substantially toroidally-shaped and **in that** the corresponding one of said functional elements (1, 3) has a body equipped with a compartment (1a, 3a) open on one side and equipped with a central hub (1b, 3b) to receive said toroidal end (2a, 2b).

2. Tensioning device as in claim 1), wherein said toroidal end (2a, 2b) is moulded integrally with said rope.

3. Device as in claim 2), wherein the rope (2) and the corresponding toroidal ends (2a, 2b) are made of mouldable elastomeric material.

4. Device as in claim 3), wherein said compartment (1a, 3a) has an opening (1c, 3c) also along the lateral side from which the linear portion of said elastic rope (2) is apt to come out.

5. Device as in claim 4), wherein said opening (1c, 3c) extends up to the open side of the compartment (1a, 3a) so as to allow inserting in a crosswise manner said toroidal end (2a, 2b) into the compartment and to let said rope (2) portion come out from said opening (1c, 3c).

6. Device as in any one of the claims from 4) to 5), wherein said body further has a closing cover (7a, 7b) of the open side of the compartment.

7. Device as claimed in any one of the claims from 4) to 6), wherein from one of said functional bodies a coupling hook (6) extends towards a tensioning chain of the snow chain.

8. Device as in any one of the claims from 4) to 7), wherein from one of said functional bodies the tines of a fork extend through which cross-shaped hole (5) runs.

9. Snow chain equipped with a tensioning device as in claim 8), wherein a portion of an outer hoop of the chain is inserted into said cross-shaped hole (5), said fork being arranged across a U-shaped link for connection to an antiskid lateral portions of the snow chain (M).

## Patentansprüche

1. Spannvorrichtung für Schneeketten, ausgestattet mit einem Einwegmechanismus zum automatischen Spannen auf einem Fahrzeugreifen, von der Bauart, die ein elastisches Seil umfasst, das an seinen Enden mit separaten funktionalen Elementen versehen ist, **dadurch gekennzeichnet, dass** das genannte Seil zumindest mit einem integralen Ende versehen ist, das im wesentlichen toroidförmig ausgebildet ist, und **dadurch**, dass das entsprechende funktionale Element einen Grundkörper aufweist, der mit einer Aufnahme versehen ist, die an einer Seite offen ist und mit einer zentralen Narbe versehen ist, um das genannte toroidförmige Ende aufzunehmen.

2. Spannvorrichtung nach Anspruch 1, **dadurch gekennzeichnet, dass** das genannte toroidförmige Ende integral mit dem genannten Seil geformt ist.

3. Vorrichtung nach Anspruch 2, **dadurch gekennzeichnet, dass** das Seil und die entsprechenden toroidförmigen Enden aus einem formbaren elastomeren Material hergestellt sind.

4. Vorrichtung nach Anspruch 3, **dadurch gekennzeichnet, dass** die genannte Aufnahme auch entlang der seitlichen Seite eine Öffnung aufweist, aus der der lineare Abschnitt des genannten elastischen Seils auszutreten in der Lage ist.

5. Vorrichtung nach Anspruch 4, **dadurch gekennzeichnet, dass** sich die genannte Öffnung bis zu der offenen Seite der Aufnahme erstreckt, so dass die Möglichkeit besteht, in kreuzweiser Art und Weise das genannte toroidförmige Ende in die Aufnahme hineinlaufen und den genannten Seilabschnitt aus der genannten Öffnung herauslaufen zu lassen.

6. Vorrichtung nach einem der Ansprüche 4 oder 5, **dadurch gekennzeichnet, dass** der genannte Grundkörper weiterhin eine verschließende Abdeckung der offenen Seite der Aufnahme aufweist.

7. Vorrichtung nach einem der Ansprüche 4 bis 6, **dadurch gekennzeichnet, dass** sich von einem der genannten funktionalen Körper ein Kupplungshaken in Richtung auf eine Spannkette der Schneekette erstreckt.

8. Vorrichtung nach einem der Ansprüche 4 bis 7, **dadurch gekennzeichnet, dass** sich von einem der genannten funktionalen Körper die Zinken einer Gabel erstrecken, durch die eine kreuzförmige Öffnung verläuft.

9. Schneekette, die mit einer Spannvorrichtung nach Anspruch 8 versehen ist, **dadurch gekennzeichnet, dass** ein Abschnitt eines äußeren Reifens der Kette in die genannte kreuzförmige Öffnung eingesetzt ist, wobei die genannte Gabel quer über ein U-förmiges Verbindungsglied angeordnet ist, zur Verbindung mit seitlichen Gleitschutzabschnitten der Schneekette.

## Revendications

1. Dispositif de tension pour chaînes à neige comportant un mécanisme anti-retour pour tension automatique sur un pneumatique de véhicule, du type comprenant une courroie élastique (2) pourvue, à ses extrémités, d'éléments fonctionnels (1, 3) différents, **caractérisé en ce que** ladite courroie (2) a au moins une extrémité (2a, 2b) d'un seul tenant, sensiblement toroïdale, et **en ce que** l'élément fonctionnel correspondant (1, 3) a un corps pourvu d'un compartiment (1a, 3a) ouvert sur une face et équipé d'un moyeu central (1b, 3b) destiné à recevoir ladite extrémité toroïdale (2a, 2b).

2. Dispositif de tension selon la revendication 1, dans lequel ladite extrémité toroïdale (2a, 2b) est moulée d'un seul tenant avec ladite courroie.

3. Dispositif selon la revendication 2, dans lequel la courroie (2) et les extrémités toroïdales (2a, 2b) correspondantes sont faites d'un matériau élastomère pouvant être moulé.

4. Dispositif selon la revendication 3, dans lequel ledit compartiment (1a, 3a) a une ouverture (1c, 3c) également le long de la face latérale par laquelle la partie linéaire de ladite courroie élastique (2) est apte à sortir.

5. Dispositif selon la revendication 4, dans lequel ladite ouverture (1c, 3c) s'étend vers le haut jusqu'à la face ouverte dudit compartiment (1a, 3a) afin de permettre l'insertion, de manière transversale, de ladite extrémité toroïdale (2a, 2b) dans le compartiment et de laisser ladite partie de courroie (2) sortir par ladite ouverture (1c, 3c).

6. Dispositif selon l'une quelconque des revendications 4 à 5, dans lequel ledit corps comporte, en outre, un couvercle de fermeture (7a, 7b) pour la face ouverte du compartiment.

7. Dispositif selon l'une quelconque des revendications 4 à 6, dans lequel s'étend, depuis l'un desdits corps fonctionnels, un crochet d'accouplement (6) vers une chaîne de tension de la chaîne à neige.

8. Dispositif selon l'une quelconque des revendications 4 à 7, dans lequel s'étendent, depuis l'un desdits corps fonctionnels, les dents d'une fourche via lesquelles passe un trou (5) en forme de croix.

9. Chaîne à neige pourvue d'un dispositif de tension selon la revendication 8, dans laquelle une partie d'une boucle externe de la chaîne est insérée dans ledit trou (5) en forme de croix, ladite fourche étant agencée transversalement à une articulation en forme de U pour connexion à une partie latérale antidérapage de la chaîne à neige (M).
